# EUROPÄISCHE PATENTANMELDUNG

(11) **EP 4 167 522 A1**
(43) Veröffentlichungstag der Anmeldung: **19.04.2023**
(21) Anmeldenummer: 22171866.1
(22) Anmeldetag: 05.05.2022
(51) Int. Cl.: H04L 9/40

(54) **VERFAHREN ZUR GEWÄHRLEISTUNG EINER IT-SICHERHEIT EINER AUTOMATISIERUNGSANLAGE UND SICHERHEITSSYSTEM**

(30) Priorität: 18.10.2021 DE 102021211755
(71) Anmelder: Siemens Aktiengesellschaft, 80333 München (DE)
(72) Erfinder: LUKAS, Klaus, 81379 München (DE); FISCHER, Christoph, 86551 Untermauerbach (DE); SIMOES MORAIS, Julio Ricardo, 4485-495 Mindelo (PT); KULICKE, Marcel, 80687 München (DE)
(74) Vertreter: Siemens Patent Attorneys

(57) **Zusammenfassung**

Bei dem Verfahren zur Gewährleistung einer IT-Sicherheit einer Automatisierungsanlage wird eine zur Authentisierung an einem Endpunkt der Automatisierungsanlage bislang vorgesehene Authentisierungsinformation auf eine Mindestanforderung an eine IT-Sicherheit geprüft und dann, wenn die Authentisierungsinformation die Mindestanforderung an die IT-Sicherheit nicht erfüllt, eine neue Authentisierungsinformation generiert, wobei ein Authentisierungsmodul (TC) zur Authentisierung (UPW) an dem Endpunkt (DEV) befähigt wird, indem das Authentisierungsmodul mit der neuen Authentisierungsinformation versehen wird.

Das Sicherheitssystem für eine Automatisierungsanlage weist ein Prüfmodul, das ausgebildet ist, eine zur Authentisierung an einem Endpunkt der Automatisierungsanlage bislang vorgesehene Authentisierungsinformation auf eine Mindestanforderung an eine IT-Sicherheit zu prüfen,
und ein Generierungsmodul, das ausgebildet ist, dann, wenn die Authentisierungsinformation die Mindestanforderung an die IT-Sicherheit nicht erfüllt, eine neue Authentisierungsinformation zu generieren, und ein Authentisierungsmodul (TC) auf, welchem zur Authentisierung (UPW) an dem Endpunkt (DEV) mit der neuen Authentisierungsinformation die Authentisierungsinformation übermittelbar ist oder welches das Generierungsmodul aufweist.

## Beschreibung

Die Erfindung betrifft ein Verfahren zur Gewährleistung einer IT-Sicherheit einer Automatisierungsanlage sowie ein Sicherheitssystem.

In industriellen Anlagen werden Geräte regelmäßig mit Passwörtern geschützt. Gerade in industriellen Umgebungen, insbesondere bei Automatisierungsanlagen, ist die Verwendung von Passworten jedoch regelmäßig unhandlich und umständlich, etwa aufgrund von vorgeschriebener Schutzbekleidung wie Handschuhen oder aufgrund des Umstands, dass Geräte von mehreren verschiedenen Benutzern zeitnah bedient werden müssen.

Aus diesem Grund werden Passwörter in Industriebumgebungen oftmals entweder gar nicht gesetzt oder aber es werden sehr kurze Passwörter gewählt, um die Eingabe zu verschnellern. Obwohl in der Regel zusätzliche Schutzmaßnahmen der Anlagen existieren, wie z.B. Firewalls oder Zellenkonzepte, ist ein grundlegender Passwortschutz von Automatisierungsanlagen für die Umsetzung einer Defense-in-Depth Strategie wichtig und erschwert Angriffe deutlich.

In klassischen IT-Umgebungen stellt sich dieses Problem i.d.R. nicht, da hier die Passwortkomplexität bei der Eingabe geprüft wird und nur ausreichend starke Passwörter erlaubt werden. Diese Prüfung bei der Eingabe existiert in vielen Industriegeräten hingegen nicht, da deren Laufzeit häufig signifikant länger ist als bei der klassischen IT und diese standardmäßig eingestellte Prüfung in sehr alten Geräten noch nicht vorhanden ist.

Vor diesem Hintergrund ist es Aufgabe der Erfindung, ein verbessertes Verfahren zur Gewährleistung einer IT-Sicherheit einer Automatisierungsanlage zu schaffen, mit welchem insbesondere dem Problem schwacher Authentisierungsinformationen begegnet werden kann. Zudem ist es Aufgabe der Erfindung, ein verbessertes Sicherheitssystem zu schaffen, mit welchem ein solches verbessertes Verfahren ausgeführt werden kann.

Diese Aufgabe der Erfindung wird mit einem Verfahren mit den in Anspruch 1 angegebenen Merkmalen sowie mit einem Sicherheitssystem mit den in Anspruch 12 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Gewährleistung einer IT-Sicherheit einer Automatisierungsanlage wird eine zur Authentisierung an einem Endpunkt der Automatisierungsanlage bislang vorgesehene Authentisierungsinformation auf eine Mindestanforderung an eine IT-Sicherheit geprüft und es wird dann, wenn die Authentisierungsinformation die Mindestanforderung an die IT-Sicherheit nicht erfüllt, eine neue Authentisierungsinformation generiert und es wird ein Authentisierungsmodul zur Authentisierung an dem Endpunkt befähigt, indem das Authentisierungsmodul mit der neuen Authentisierungsinformation versehen wird.

Bei dem erfindungsgemäßen Verfahren ist eine Authentisierung an dem Endpunkt mittels des Authentisierungsmoduls an dem Endpunkt der Automatisierungsanlage möglich. Mittels des erfindungsgemäßen Verfahrens kann eine neue Authentisierungsinformation generiert dann werden, wenn eine bislang vorgesehene Authentisierungsinformation die Mindestanforderung an die IT-Sicherheit nicht erfüllt, sodass die neue Authentisierungsinformation die Mindestanforderung nunmehr erfüllt. Zweckmäßig wird dazu bei dem Verfahren die Mindestanforderung nach aktuellem Stand der Technik und bemessen an dem Sicherheitsbedarf der Automatisierungsanlage hinreichend hoch gewählt. Folglich kann erfindungsgemäß ausgeschlossen werden, eine zu schwache Authentisierungsinformation, insbesondere in Gestalt eines zu schwachen Passworts, zu wählen. Die IT-Sicherheit des Automatisierungssystems ist bei dem erfindungsgemäßen Verfahren folglich vorteilhaft selbst dann gewährleistet, wenn Authentisierungsinformationen für Endpunkte der Automatisierungsanlagen die Mindestanforderung zwischenzeitlich nicht oder nicht mehr erfüllen, etwa weil sich die Mindestanforderung zwischenzeitlich erhöht hat oder weil Authentisierungsinformationen durch neue Nutzer der Automatisierungsanlage hinzugekommen sind. Denn mittels des erfindungsgemäßen Verfahrens werden die Authentisierungsinformationen derart aktualisiert, dass die Mindestanforderung erfüllt wird.

Mittels des Verfahrens können bei Automatisierungsanlagen vorteilhaft Authentisierungsinformationen dezentral gesetzt werden. Die Mindestanforderungen an die Authentisierungsinformation umfassen Mindestanforderungen an eine Länge der Authentisierungsinformation und eine bestimmte Komplexität der Authentisierungsinformation. Insbesondere die Länge und/oder die Komplexität von Authentisierungsinformationen beeinflussen maßgeblich die Sicherheit von Authentisierungsinformationen.

Mittels des erfindungsgemäßen Verfahrens kann vorteilhaft eine Abweichung von einer vorgegebenen Mindestanforderung weitgehend ohne Interaktion von Nutzern mit dem Endpunkt erkannt werden und der Endpunkt automatisch - ohne Benutzerinteraktion - wieder in einen sicheren Zustand mit hinreichend starken Authentisierungsinformationen überführt werden.

Mittels des erfindungsgemäßen Verfahrens ist es folglich nicht erforderlich, eine Authentisierungsinformation für den Endpunkt in jedem Fall zu generieren, sondern eine neue Authentisierungsinformation wird nur dann generiert, wenn die bislang für den Endpunkt vorgesehene Authentisierungsinformation hinsichtlich der IT-Sicherheit nicht hinreichend sicher im Sinne der Mindestanforderung ist. Auf diese Weise ändert das erfindungsgemäße Verfahren vorgesehene Betriebsabläufe beim Betrieb der Automatisierungsanlage nur insoweit, als dies für eine Gewährleistung der angestrebten IT-Sicherheit erforderlich ist. Der Betriebsablauf bleibt hingegen ungeändert, wenn die angestrebte IT-Sicherheit ohnehin nach wie vor gewährleistet ist.

Das erfindungsgemäße Verfahren lässt sich vorteilhaft vollständig computer-implementiert durchführen, sodass einem sicherheitskritischen menschlichen Bedienverhalten, welches die IT-Sicherheit von Endpunkten der Automatisierungsanlage und somit auch der Automatisierungsanlage aus Bequemlichkeitsgründen oder aus Gewohnheitsgründen beeinträchtigen kann, wirksam begegnet werden kann. In einer besonders bevorzugten Weiterbildung des erfindungsgemäßen Verfahrens wird das Authentisierungsmodul mit der neuen Authentisierungsinformation derart versehen, dass die neue Authentisierungsinformation mit dem Authentisierungsmodul generiert wird.

Bei einer bevorzugten Weiterbildung des erfindungsgemäßen Verfahrens ist die Mindestanforderung mit einer Mindestlänge oder mit einer Mindestkomplexität, insbesondere eine Nutzung eines Symbolvorrats, der Authentisierungsinformation gebildet. So kann die Mindestkomplexität eine Nutzung eines Symbolvorrats von Symbolen, mit welchen die Authentisierungsinformation gebildet ist, bedingen. Eine Mindestkomplexität kann insbesondere eine Nutzung von Sonderzeichen und/oder mindestens eines Großbuchstabens und mindestens eines Kleinbuchstabens und/oder von Zahlen bei Passwörtern umfassen.

Bei dem Verfahren wird gemäß einer vorteilhaften Weiterbildung der Erfindung eine Metainformation der, vorzugsweise neuen, Authentisierungsinformation, insbesondere eine Nutzungsdauer und/oder einen Gültigkeitszeitraum und/oder ein Alter der Authentisierungsinformation und/oder einen eine Komplexität der Authentifizierungsfunktion angebenden Komplexitätswert und/oder einen Funktionswert einer auf die Authentifizierungsinformation angewandten Einwegfunktion, gespeichert. Vorzugsweise ist ein solcher Funktionswert ein Hashwert einer auf die Authentisierungsinformation angewandten Hashfunktion. Mittels solcher Hashwerte lässt sich leicht und informationssicher prüfen, ob etwa Authentisierungsinformationen ausgeschlossenen Authentisierungsinformationen entsprechen, welche aufgrund der Mindestanforderung nicht zulässig sind.

Geeigneterweise ist bei dem erfindungsgemäßen Verfahren die Authentisierungsinformation ein Passwort. Vorzugsweise umfasst die Mindestanforderung eine Mindestlänge des Passworts und/oder eine Mindestkomplexität des Passworts. Zweckmäßig können insbesondere Nutzungen bestimmter Zeichenkategorien für das Passwort gefordert werden und/oder triviale oder bereits öffentlich publizierte oder allgemein bekannte Passwörter ausgeschlossen werden. Die Passwortlänge kann auch durch Spezifika des Endpunkts beschränkt oder angepasst werden. Solche ausgeschlossenen Authentisierungsinformationen können etwa Passwörter sein, welche bei bekannt gewordenen Datenpannen an die Öffentlichkeit gelangt sind und welche deshalb nicht abermals Verwendung finden sollen, oder welche als notorisch schwache Passwörter bekannt sind, etwa "Passwort", "123456", "qwert", oder auch bekannte Namen wie "Christoph".

In einer besonders vorteilhaften Weiterbildung der Erfindung wird das Verfahren wiederholt, insbesondere in regelmäßigen zeitlichen Abständen, durchgeführt und es wird vorzugsweise in Abhängigkeit von der Metainformation geprüft, d. h. anhand der Metainformation beurteilt, ob die Mindestanforderung erfüllt ist. Aufgrund der Wiederholung des Verfahrens insbesondere in regelmäßigen zeitlichen Abständen kann die IT-Sicherheit einer Automatisierungsanlage hinsichtlich der Authentisierungsinformationen dauerhaft gewährleistet werden. Insbesondere können zwischenzeitlich in die Automatisierungsanlage neu eingebundene Endpunkte neu einer Überprüfung unterzogen werden. Weiterhin vorteilhaft kann die Mindestanforderung an aktuelle Standards zur IT-Sicherheit angepasst werden und es können zwischenzeitlich aus Sicherheitslücken oder sonstigen für die IT-Sicherheit relevanten Vorfällen bekannt gewordene und inzwischen als unsicher geltende Authentisierungsinformationen, insbesondere in der Art einer Blacklist, aufgenommen werden. In dieser Weiterbildung der Erfindung bleibt daher die Mindestanforderung dauerhaft aktuell. Zudem kann auf zwischenzeitlich vorgenommene Änderungen der Authentisierungsinformation, etwa durch neu hinzugekommene Nutzer von Endpunkten, reagiert werden, wenn zwischenzeitlich als unsicher geltende Authentisierungsinformationen verwendet werden

Insbesondere anhand der Metainformation kann leicht geprüft und beurteilt werden, ob generell oder inzwischen als unsicher geltende Authentisierungsinformationen verwendet werden, etwa anhand eines Nutzungsalters oder anhand eines Hashwerts oder anhand einer Komplexitätsinformation der Authentisierungsinformation. Zudem erfordert ein Prüfen anhand der Metainformation nicht die direkte Prüfung an den Endpunkten selbst, sondern es kann zur Prüfung der Authentisierungsinformation auf die gespeicherten Metainformationen zu den Authentisierungsinformationen der Endpunkte zurückgegriffen werden. Auf diese Weise kann eine Wiederholung der Prüfung mit einer besonders hohen Frequenz erfolgen, da die Prüfung der Metainformationen keine direkte Interaktion von Nutzern mit den Endpunkten selbst erfordert.

Bei dem Verfahren gemäß der Erfindung werden vorzugsweise bislang vorgesehene Authentisierungsinformation und/oder Metainformation mit Authentisierungsinformationen und/oder Metainformationen aus vorangegangenen oder bekannt gewordenen Sicherheitsvorfällen einem Vergleich unterzogen und es wird in Abhängigkeit von dem Vergleich beurteilt, ob die Mindestanforderung erfüllt ist. In dieser Weiterbildung der Erfindung kann auf für die IT-Sicherheit relevante Vorfälle in der Vergangenheit reagiert werden. Insbesondere bislang verwendete, aber zwischenzeitlich als unsicher geltende Authentisierungsinformationen können so vorteilhaft ausgeschlossen werden.

Zweckmäßig ist das Authentisierungsmodul zur Übertragung der Authentisierungsinformation an den Endpunkt ausgebildet und eingerichtet. Auf diese Weise kann ein Nutzer auf den Endpunkt zugreifen, indem der Nutzer mit dem Authentisierungsmodul die Authentisierungsinformation an den Endpunkt überträgt. Der Nutzer muss folglich die Authentisierungsinformation nicht manuell an dem jeweiligen Endpunkt eingeben, sondern es können die Authentisierungsinformationen direkt im Authentisierungsmodul gespeichert werden und bei Bedarf an den Endpunkt übermittelt werden. Das Authentisierungsmodul ist vorzugsweise mittels einer Nutzerauthentisierungsinformation, etwa mittels eines Masterpassworts eines bestimmten Nutzers, freischaltbar, sodass das Authentisierungsmodul, nachdem es vom Nutzer freigeschaltet worden ist, die Authentisierungsinformation an den Endpunkt übertragen kann.

In einer besonders bevorzugten Weiterbildung des erfindungsgemäßen Verfahrens ist das Authentisierungsmodul zur Authentisierung mittels einer Emulation einer Eingabe der Authentisierungsinformation ausgebildet. D. h. es wird bei dem erfindungsgemäßen Verfahren ein solches Authentisierungsmodul herangezogen, welches zur Authentisierung mittels einer Emulation einer Eingabe der Authentisierungsinformation ausgebildet ist. Auf diese Weise können Authentisierungsinformationen in an sich bekannter Weise über eine Tastaturschnittstelle übertragen werden, wobei Nutzer die Authentisierungsinformation vorteilhaft nicht manuell eingeben müssen. Vorteilhaft muss die Authentisierungsinformation nicht gemerkt werden, sondern kann automatisiert aus einem Speicher des Authentisierungsmoduls abgerufen werden.

Bei dem Verfahren gemäß der Erfindung wird die Authentisierungsinformation in dem Authentisierungsmodul kryptographisch geschützt gespeichert. Zweckmäßig wird dazu ein Authentisierungsmodul herangezogen, welches zur kryptographisch geschützten Speicherung der Authentisierungsinformation eingerichtet und ausgebildet ist. In dieser Weiterbildung der Erfindung ist die IT-Sicherheit auch dann nicht beeinträchtigt, wenn ein unautorisierter Angreifer Zugriff auf das Authentisierungsmodul erlangt. Alternativ oder zusätzlich ist das Authentisierungsmodul hardwaregesichert, sodass auch bei einem physischen Zugriff auf das Authentisierungsmodul ein Auslesen der Authentisierungsinformation nicht oder nur sehr aufwändig gelingt. Insbesondere ist das Authentisierungsmodul mittels eines hardwarebasierten Key-Stores hardwaregesichert.

Bevorzugt ist bei dem erfindungsgemäßen Verfahren die Automatisierungsanlage eine Fertigungsanlage und/oder eine Prozesstechnikanlage. Besonders bevorzugt ist die Automatisierungsanlage eine industrielle Automatisierungsanlage und/oder eine Steuerungsanlage, insbesondere eine Industriesteuerungsanlage.

Bei dem erfindungsgemäßen Verfahren ist der Endpunkt mindestens ein Fertigungswerkzeug und/oder ein, insbesondere industrielles, Steuergerät, vorzugsweise ein Steuergerät der Automatisierungsanlage, und/oder ein Prozesstechnikgerät oder der Endpunkt umfasst ein solches Fertigungswerkzeug und/oder Steuergerät und/oder Prozesstechnikgerät.

Das erfindungsgemäße Sicherheitssystem für eine Automatisierungsanlage ist zur Ausführung eines erfindungsgemäßen Verfahrens zur Gewährleistung einer IT-Sicherheit der Automatisierungsanlage ausgebildet. Das erfindungsgemäße Sicherheitssystem weist dazu ein Prüfmodul auf, das ausgebildet ist, eine zur Authentisierung an einem Endpunkt der Automatisierungsanlage bislang vorgesehene Authentisierungsinformation auf eine Mindestanforderung an die IT-Sicherheit zu prüfen. Das erfindungsgemäße Sicherheitssystem weist zudem ein Generierungsmodul auf, dass ausgebildet ist, dann, wenn die Authentisierungsinformation die Mindestanforderung an die IT-Sicherheit nicht erfüllt, eine neue Authentisierungsinformation zu generieren. Zudem weist das erfindungsgemäße Sicherheitssystem ein Authentisierungsmodul auf, welchem zur Authentisierung an dem Endpunkt mit der neuen Authentisierungsinformation die neue Authentisierungsinformation übermittelbar ist oder welches das Generierungsmodul aufweist. Mittels des erfindungsgemäßen Sicherheitssystems lässt sich das erfindungsgemäße Verfahren ausführen und die IT-Sicherheit der Automatisierungsanlage gewährleisten. Zweckmäßig ist das Authentisierungsmodul zur Übermittlung der neuen Authentisierungsinformation an den Endpunkt ausgebildet.

Nachfolgend wird die Erfindung anhand eines in der Zeichnung dargestellten Ausführungsbeispiels näher erläutert. Die einzige Zeichnungsfigur 1 zeigt ein Ausführungsbeispiel eines erfindungsgemäßen Verfahrens zur Gewährleistung einer IT-Sicherheit einer Automatisierungsanlage schematisch in einer Prinzipskizze.

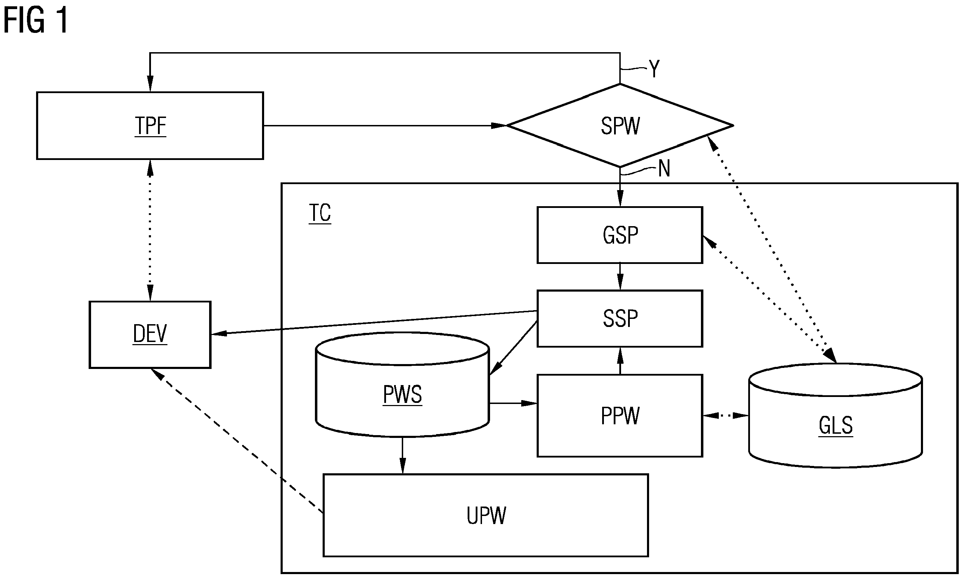

Bei dem in Fig. 1 dargestellten erfindungsgemäßen Verfahren wird die IT-Sicherheit einer Automatisierungsanlage in Gestalt einer digital gesteuerten Fertigungsanlage gewährleistet, indem eine Authentisierung an Endpunkten der Automatisierungsanlage mit erhöhter IT-Sicherheit ermöglicht wird. Grundsätzlich kann es sich bei der Automatisierungsanlage in weiteren, nicht eigens dargestellten Ausführungsbeispielen auch um eine Prozesstechnikanlage oder um eine sonstige Automatisierungsanlage handeln. Vorliegend handelt es sich um eine industrielle Automatisierungsanlage.

Im Ausführungsbeispiel gemäß Fig. 1 bildet ein Gerät DEV in Gestalt einer Steuerungseinrichtung der Automatisierungsanlage einen Endpunkt, an welchem mittels des erfindungsgemäßen Verfahrens die Authentisierung verbessert wird.

Bei dem Gerät DEV wird in regelmäßigen Zeitabständen mittels einer Passwortverifikationsplattform TPF eine Stärke eines Passworts zur Authentisierung am Gerät DEV geprüft. Unter der Stärke des Passworts ist dabei eine Komplexität des Passworts zu verstehen. Diese Komplexität wird anhand einer Länge des Passworts sowie anhand eines genutzten Zeichenumfangs des Passworts, d. h. beispielsweise anhand des Umstands, ob Sonderzeichen im Passwort enthalten sind oder nicht, sowie anhand eines Speicherungszeitpunkts des Passworts geprüft. Der Speicherungszeitpunkt des Passworts gibt an, seit wann das Passwort in Benutzung ist. Ferner wird zur Prüfung der Stärke des Passworts ein Hashwert des Passworts herangezogen, welcher mit Hashwerten früherer Passwörter verglichen wird. Der Hashwert des Passworts erlaubt eine Prüfung, ob das aktuell vergebene Passwort bereits zu einem früheren Zeitpunkt vergeben worden ist, etwa ob dauerhaft lediglich zwei Passwörter im Wechsel genutzt werden oder ob eine regelmäßige Aktualisierung des Passworts mit bislang nicht benutzten Passwörtern erfolgt. Anhand dieser Kriterien wird die Stärke des Passworts geprüft und einem Vergleich SPW mit einer Mindeststärke des Passworts unterzogen. Wenn der Vergleich SPW das Vorliegen J einer Mindeststärke des Passworts liefert, so wird mit der regelmäßigen Prüfung des Passworts des Geräts DEV in regelmäßigen Zeitabständen fortgefahren. Zeigt der Vergleich SPW hingegen das Fehlen N einer Mindeststärke des Passworts an, so übernimmt eine vertrauenswürdige Komponente TC das Passwortmanagement wie nachfolgend beschrieben:
Die vertrauenswürdige Komponente TC ist als Vertrauensanker ausgebildet, welcher verschlüsselte Speicher und kryptographisch geschützte Prozessoren aufweist, die gegenüber Manipulationen soft- und hardwareseitig geschützt sind.

Die vertrauenswürdige Komponente TC umfasst ein Passwortgenerierungsmodul, mittels welchem in einem Passwortgenerierungsschritt GSP ein sicheres Passwort für das Gerät DEV generiert wird. Dabei bedeutet "sicheres" Passwort, dass das Passwort die oben geforderte Stärke aufweist.

In einem Passwortsetzungsschritt SSP wird nun das Passwort als Passwort zur Authentisierung an dem Gerät DEV gesetzt.

In einem Passwortspeicher PWS werden Metainformationen des im Passwortsetzungsschritt SSP gesetzten Passworts und das Passwort selbst gespeichert. Zu diesen Metainformationen zählen ein Hashwert des Passworts sowie der Generierungszeitpunkt der Generierung des Passworts. Mittels der Metainformationen des Passwortspeichers PWS können in kurzen Zeitintervallen Prüfungen PPW der Passwörter daraufhin erfolgen, ob in vorausgegangenen Sicherheitsvorfällen, etwa in einem festgestellten unberechtigten Authentisieren an dem Gerät DEV, das für das Gerät DEV im Passwortspeicher PWS gespeicherte Passwort genutzt worden ist. In diesem Fall gilt das Passwort als kompromittiert und es wird mittels eines erneuten Passwortgenerierungsschritts GPW ein neues Passwort für das Gerät DEV generiert. Ein Vergleich der Passwörter aus Sicherheitsvorfällen und dem aktuell für das Gerät DEV gespeicherten Passwort kann mittels eines Vergleichs der Hashwerte erfolgen, sodass für den Vergleich kein Vergleich der Passwörter im Klartext erforderlich ist.

Zudem können die Prüfungen PPW der Passwörter eine Prüfung PPW der Passwörter anhand der Generierungszeitpunkte umfassen und es kann bei zu alten Passwörtern ein erneuter Passwortgenerierungsschritt GPW für ein neues Passwort für das Gerät DEV angestoßen werden.

Ein zulässiges Höchstalter für die Passwörter sowie eine Liste von Hashwerten kompromittierter Passwörter werden in einer Passwort-Richtlinie buchgehalten, welche in der vertrauenswürdigen Komponente TC in einem Richtlinienspeicher GLS gespeichert ist und fortlaufend aktualisiert wird. In der Passwort-Richtlinie ist auch die oben bereits erwähnte geforderte Stärke des Passworts festgelegt. Grundsätzlich kann die Passwort-Richtlinie in weiteren, nicht eigens dargestellten Ausführungsbeispielen auch in einem solchen Richtlinienspeicher GLS festgehalten werden, welcher nicht Teil der vertrauenswürdigen Komponente TC ist, sondern welcher von der vertrauenswürdigen Komponente TC lediglich konsultiert wird, um die Passwort-Richtlinie auszulesen.

Das auf diese Weise hinreichend stark und aktuell gehaltene Passwort des Passwortspeichers wird nun im Falle, dass ein Nutzer auf das Gerät DEV zugreifen möchte, aus dem Passwortspeicher PWS ausgelesen und dem Gerät DEV direkt oder mittels einer kryptographisch geschützten Verbindung über eine durch den Nutzer mitgeführten Einrichtung drahtlos, im dargestellten Ausführungsbeispiel mittels eines Bluetooth-Dongles über eine Tastaturemulation, in einem Übermittlungsschritt UPW übermittelt. In weiteren, nicht eigens dargestellten Ausführungsbeispielen kann das Passwort auch auf andere Weise an das Gerät DEV übermittelt werden.

Das Gerät DEV prüft nun das Passwort und lässt den Nutzer zum Zugriff auf das Gerät DEV zu.

Die Passwort-Richtlinie des Richtlinienspeichers GLS wird zugleich herangezogen, um die Stärke des Passworts im Vergleich SPW zu unternehmen.

Mittels des erfindungsgemäßen Verfahrens wird also sichergestellt, dass zur Authentisierung an dem Gerät DEV nur Passwörter mit einer Mindeststärke und mit einer hinreichenden Aktualität genutzt werden können.

Im dargestellten Ausführungsbeispiel werden die Passwörter kryptographisch geschützt im Passwortspeicher PSW gespeichert, sodass die Passwörter nicht im Klartext im Passwortspeicher PWS vorliegen.

Die Passwortverifikationsplattform TPF und die vertrauenswürdige Komponente TC mit dem Passwortgenerierungsmodul und dem Passwortspeicher PWS und dem Richtlinienspeicher GLS, sowie optional die ggf. vorhandene durch den Nutzer mitgeführte Einrichtung bilden das erfindungsgemäße Sicherheitssystem. In einem weiteren Ausführungsbeispiel, welches nicht eigens dargestellt ist, ist der Richtlinienspeicher GLS nicht Teil des Sicherheitssystems, sondern das Sicherheitssystem weist lediglich eine Schnittstelle zu einem Richtlinienspeicher GLS auf.

## Patentansprüche

1. Verfahren zur Gewährleistung einer IT-Sicherheit einer Automatisierungsanlage, bei welchem eine zur Authentisierung an einem Endpunkt der Automatisierungsanlage bislang vorgesehene Authentisierungsinformation auf eine Mindestanforderung an eine IT-Sicherheit geprüft wird und dann, wenn die Authentisierungsinformation die Mindestanforderung an die IT-Sicherheit nicht erfüllt, eine neue Authentisierungsinformation generiert wird und bei welchem ein Authentisierungsmodul (TC) zur Authentisierung (UPW) an dem Endpunkt (DEV) befähigt wird, indem das Authentisierungsmodul mit der neuen Authentisierungsinformation versehen wird.

2. Verfahren nach dem vorhergehenden Anspruch, bei welchem die Authentisierungsinformation ein Passwort ist.

3. Verfahren nach einem der vorhergehenden Ansprüche, bei welchem die Mindestanforderung mit einer Mindestlänge oder mit einer Mindestkomplexität, insbesondere eine Ausschöpfung eines Symbolvorrats, der Authentisierungsinformation gebildet ist.

4. Verfahren nach dem vorhergehenden Anspruch, bei welchem das Authentisierungsmodul (TC) eine Eingabe der Authentisierungsinformation, insbesondere eine Tastatureingabe der Authentisierungsinformation, emuliert.

5. Verfahren nach einem der vorhergehenden Ansprüche, bei welchem eine Metainformation der, insbesondere neuen, Authentisierungsinformation, insbesondere eine Nutzungsdauer und/oder einen Gültigkeitszeitraum und/oder ein Alter der Authentisierungsinformation und/oder einen eine Komplexität der Authentifizierungsfunktion angebenden Komplexitätswert und/oder einen Funktionswert einer auf die Authentifizierungsinformation angewandten Einwegfunktion, gespeichert wird.

6. Verfahren nach dem vorhergehenden Anspruch, bei welchem das Verfahren wiederholt, insbesondere in regelmäßigen zeitlichen Abständen, durchgeführt wird und bei welchem in Abhängigkeit von der Metainformation geprüft wird, ob die Mindestanforderung erfüllt ist.

7. Verfahren nach einem der vorhergehenden Ansprüche, bei welchem die bislang vorgesehene Authentisierungsinformation und/oder Metainformation einem Vergleich (PPW) mit Authentisierungsinformationen und/oder Metainformationen aus vorangegangenen oder bekannt gewordenen Sicherheitsvorfällen unterzogen werden und in Abhängigkeit von dem Vergleich (PPW) beurteilt wird, ob die Mindestanforderung erfüllt ist.

8. Verfahren nach einem der vorhergehenden Ansprüche, bei welchem das Authentisierungsmodul (TC) zur Authentisierung mittels einer Emulation einer Eingabe der neuen Authentisierungsinformation ausgebildet ist.

9. Verfahren nach einem der vorhergehenden Ansprüche, bei welchem das Authentisierungsmodul (TC) zur kryptographisch geschützten Speicherung der neuen Authentisierungsinformation eingerichtet und ausgebildet ist.

10. Verfahren nach einem der vorhergehenden Ansprüche, bei welchem die Automatisierungsanlage eine Fertigungsanlage und/oder eine Prozesstechnikanlage ist.

11. Verfahren nach einem der vorhergehenden Ansprüche, bei welchem der Endpunkt (DEV) mindestens ein Fertigungswerkzeug und/oder ein, insbesondere industrielles, Steuergerät und/oder ein Prozesstechnikgerät umfasst.

12. Sicherheitssystem für eine Automatisierungsanlage, welches ein Prüfmodul aufweist, das ausgebildet ist, eine zur Authentisierung an einem Endpunkt der Automatisierungsanlage bislang vorgesehene Authentisierungsinformation auf eine Mindestanforderung an eine IT-Sicherheit zu prüfen,
und welches ein Generierungsmodul aufweist, dass ausgebildet ist, dann, wenn die Authentisierungsinformation die Mindestanforderung an die IT-Sicherheit nicht erfüllt, eine neue Authentisierungsinformation zu generieren, und welches ein Authentisierungsmodul (TC) aufweist, welchem zur Authentisierung (UPW) an dem Endpunkt (DEV) mit der neuen Authentisierungsinformation die Authentisierungsinformation übermittelbar ist oder welches das Generierungsmodul aufweist.
